(19) **Europäisches Patentamt**
**European Patent Office**
**Office européen des brevets**

(11) **EP 4 741 232 A1**

(12) **EUROPÄISCHE PATENTANMELDUNG**

(43) Veröffentlichungstag:
**13.05.2026   Patentblatt 2026/20**

(21) Anmeldenummer: **24212435.2**

(22) Anmeldetag: **12.11.2024**

(51) Internationale Patentklassifikation (IPC):
*B60R 16/00* (2006.01)   *H02H 11/00* (2006.01)

(52) Gemeinsame Patentklassifikation (CPC):
**H02H 11/003; B60R 16/00; H02J 9/06; H02J 9/061**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Naumovic, Albert**
  **92237 Sulzbach-Rosenberg (DE)**
• **Pusch, Julian**
  **92266 Ensdorf (DE)**

(74) Vertreter: **Siemens Patent Attorneys**
**Postfach 22 16 34**
**80506 München (DE)**

(54)   **AUTOMATISIERUNGSKOMPONENTE**

(57)   Die Erfindung betrifft eine Automatisierungskomponente (1), umfassend
eine Leiterplatte (LP) mit elektrischen Bauteilen (B1,... ,B4) zur Erfüllung von Automatisierungsaufgaben, einen ersten Versorgungsspannungsanschluss (IN_24V) und
einen zweiten Versorgungsspannungsanschluss (S_GND) ausgestaltet zum Anschluss einer Versorgungsspannung (24V), wobei zwischen dem ersten Versorgungsspannungsanschluss (IN_24V) und einem Einspeisepunkt (S_1P24V) der Versorgungsspannung (24V) für die Bauteile (B1,... ,B4) eine Verpolschutzschaltung (VSS) angeordnet ist, wobei eine Überbrückungs-Schaltung (US) in die Verpolschutzschaltung (VSS) integriert ist, und ausgestaltet ist im Falle eines Spannungseinbruchs (SE) der Versorgungsspannung (24V), den Energiefluss für die elektrischen Bauteile (B1,..,B4) aufrecht zu erhalten.

FIG 1

EP 4 741 232 A1

**Beschreibung**

Die Erfindung betrifft eine Automatisierungskomponente umfassend eine Leiterplatte mit elektrischen Bauteilen zur Erfüllung von Automatisierungsaufgaben, einen ersten Versorgungsspannungsanschluss und einen zweiten Versorgungsspannungsanschluss, ausgestaltet zum Anschluss einer Versorgungsspannung, wobei zwischen dem ersten Versorgungsspannungsanschluss und einem Einspeisepunkt der Versorgungsspannung für die Bauteile eine Verpolschutzschaltung angeordnet ist.

Bei aktuellen Schaltungen, die als Verpolschutzschaltung nach dem Stand der Technik betrachtet werden, besteht dieser Schutz aus einem PMOS und einer Z-Diode. Diese Technologie bietet Schutz vor umgekehrter Polarität, erfüllt jedoch nicht die neuen Anforderungen der IEC 61131-2, die verlangen, dass Spannungsversorgungen Spannungseinbrüche von 1 ms überstehen müssen und dabei ohne Beeinflussung weiter funktionieren sollen.

Die bestehende Lösung hat den Nachteil, dass sie keine Mechanismen zur Überbrückung solcher Spannungseinbrüche enthält. Daher ist die aktuelle Verpolschutzschaltung, insbesondere in Feldgeräten der Automatisierungstechnik, unzureichend, weil sie keinen Schutz bei kurzen Spannungseinbrüchen bietet.

Es ist eine Aufgabe der Erfindung eine Automatisierungskomponente bereitzustellen, welche Spannungseinbrüche verkraftet.

Für die eingangs genannte Automatisierungskomponente wird die Aufgabe dadurch gelöst, dass eine Überbrückungs-Schaltung in die Verpolschutzschaltung integriert ist, und ausgestaltet ist, im Falle eines Spannungseinbruchs der Versorgungsspannung, den Energiefluss für die elektrischen Bauteile aufrecht zu erhalten.

Eine Ausgestaltungsvariante sieht vor, dass die Verpolschutzschaltung ein P-Kanal-MOSFET aufweist.

Das Bauteil SIL04P06Y ist beispielsweise ein P-Kanal-MOSFET. Es handelt sich um einen Leistungstransistor, der für den Einsatz in einer Verpolschutzschaltung für Gleichspannung geeignet ist. Der MOSFET ermöglicht es, den Stromfluss in einer Schaltung in Abhängigkeit von der angelegten Spannung zu steuern. In Verbindung mit anderen Bauteilen kann der P-Kanal-MOSFET verwendet werden, um eine Schutzschaltung zu realisieren, die verhindert, dass eine Gleichspannung bei falscher Polung Schaden anrichtet.

Vorteilhaft ist es, wenn die Überbrückungs-Schaltung einen PNP-Transistor aufweist, wobei bei der Überbrückungs-Schaltung die Basis des PNP-Transistors durch einen hochohmigen Widerstand geschützt ist.

Erfindungsgemäß wird eine Netzüberbrückungslösung durch Hinzufügen eines PNP-Transistors in die Verpolschutzschaltung integriert. Der PNP-Transistor wird bei einem Netzausfall leitend und es wird der Energiefluss zur Baugruppe über einen Pufferkondensator und einen Stützkondensator für die Dauer des Einbruchs aufrechterhalten.

Ein hochohmiger Widerstand schützt die Basis des PNP-Transistors und eine BAS16-Diode stellt sicher, dass der Verpolschutz weiterhin gegeben ist. Diese Merkmale verhindern das unkontrollierte Abschalten der Geräte und erhöhen die Effizienz und Zuverlässigkeit der Spannungsversorgungssysteme erheblich.

Die Netzüberbrückung durch den PNP-Transistor, in Kombination mit den spezifischen Kondensatorwerten, bietet nicht nur einen Schutz vor Spannungseinbrüchen, sondern stellt auch sicher, dass die Geräte die neuen Anforderungen erfüllen. Diese innovative Kombination resultiert in einer signifikanten Verbesserung der Zuverlässigkeit und Effizienz der Spannungsversorgungssysteme und erfüllt die neuen Normenanforderungen, was einen deutlichen Fortschritt gegenüber den bestehenden Lösungen ist.

Die Zeichnung zeigt ein Ausführungsbeispiel der Erfindung, dabei zeigt

FIG 1      eine Automatisierungskomponente mit einer Leiterplatte und die

FIG 2      eine Verpolschutzschaltung mit einer integrierten Überbrückungs-Schaltung.

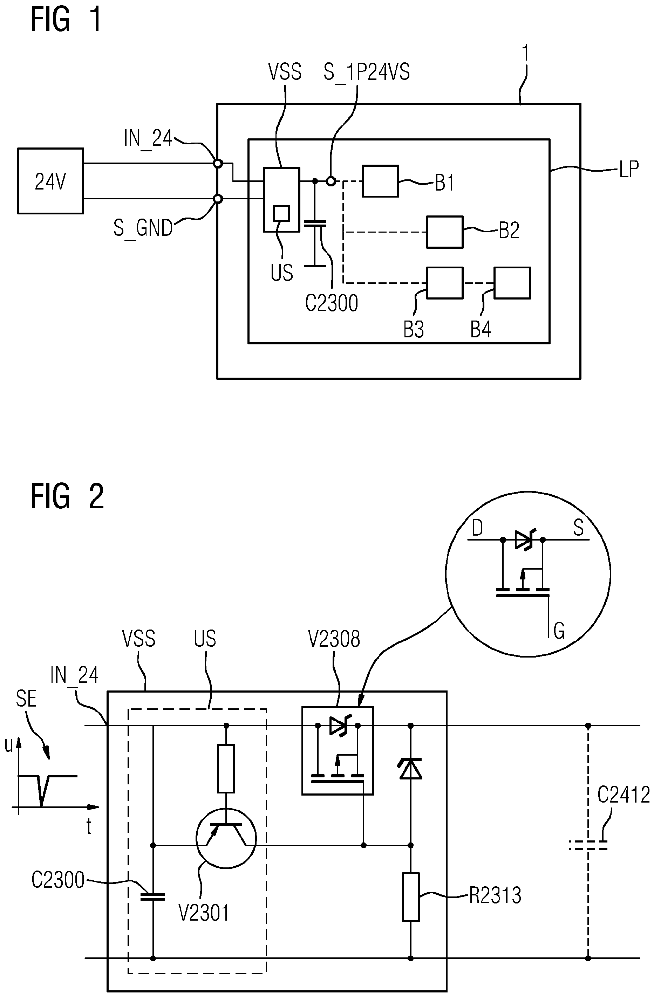

Gemäß FIG 1 ist eine Automatisierungskomponente 1 umfassend eine Leiterplatte LP mit elektrischen Bauteilen B1,...,B4 zur Erfüllung von Automatisierungsaufgaben, insbesondere in der industriellen Prozessautomatisierung, dargestellt. Die Automatisierungskomponente 1 weist einen ersten Versorgungsspannungsanschluss IN_24V und einen zweiten Versorgungsspannungsanschluss S_GND auf. Die Versorgungsspannungsanschlüsse IN_24V,S_GND sind ausgestaltet, zum Anschluss einer Versorgungsspannung 24V und eines Massepotentials. Zwischen dem ersten Versorgungsspannungsanschluss IN_24V und einem Einspeisepunkt S_1P24V, der Versorgungsspannung 24V für die Bauteile B1,...,B4, ist eine Verpolschutzschaltung VSS angeordnet.

Damit sich Spannungseinbrüche SE in der Versorgungsspannung 24V nicht negativ in der Automatisierungskomponente 1 bemerkbar machen, ist in der Verpolschutzschaltung VSS eine Überbrückungs-Schaltung US integriert.

Gemäß FIG 2 ist eine detaillierte Darstellung der Verpolschutzschaltung VSS dargestellt. Innerhalb der Verpolschutzschaltung VSS ist die Überbrückungs-Schaltung US integriert. Die Verpolschutzschaltung VSS weist in dem Versorgungsspannungzweig zwischen dem ersten Versorgungsspannungsanschluss IN_24V und dem Einspeisepunkt S_1P24V einen P-Kanal-MOSFET auf. Durch Hinzufügen eines PNP-Transistors V2301 wird eine Netzüberbrückungslösung in die Verpolschutzschaltung VSS integriert. Der PNP-Transistor V2301 wird bei einem Ausfall der Versorgungsspannung 24V leitend und kann somit einen Energiefluss für die Automatisierungskomponente 1 bzw. für deren Bauteile B1,...,B4 über einen Stützkondensator C2300 in Verbindung mit einem Pufferkondensator C2412 für eine Zeitspanne von 1ms aufrechterhalten. Zwischen dem Zweig für die Versorgungsspannung 24V und dem Massepotential ist eine Z-Diode in Reihe mit einem Widerstand R2313 angeordnet.

Zusammenfassend kann gesagt werden, die Erfindung beschreibt eine Netzüberbrückung, die in die bestehende Verpolschutzschaltung integriert wird, um Spannungseinbrüche von 1 ms gemäß den Anforderungen der IEC 61131-2 Norm zu überstehen. Kern der Lösung ist ein PNP-Transistor V2301, der bei einem Netzausfall leitend wird und den Energiefluss in die Baugruppe bzw. den Pufferkondensator C2412 mit 330μF über einen 1μF Stützkondensator C2300 für 1 ms aufrechterhält. Zur Sicherstellung des Verpolschutzes wird eine BAS16-Diode eingefügt, während ein hochohmiger Widerstand R2319 die Basis des PNP-Transistors schützt.

Das RC-Glied mit einer Zeitkonstante von 0,022 ms stellt sicher, dass die Schaltung schnell genug reagiert, um die Anforderungen zu erfüllen.

$$\tau = R * C = 22k\Omega * 1\,\mu F = 0,022\,ms$$

Diese Lösung verhindert unkontrollierte Abschaltungen bei Spannungseinbrüchen und stellt die Funktionsfähigkeit der Spannungsversorgung sicher, was bei Tests nach IEC 61000-4-29 nachgewiesen werden kann. Im Vergleich zur bisherigen Schaltung, die nur einen PMOS-Transistor und eine Z-Diode umfasst, bietet die neue Lösung eine deutlich verbesserte Zuverlässigkeit und erfüllt die Anforderungen der IEC 61131-2 Norm.

**Patentansprüche**

1. Automatisierungskomponente (1), umfassend

   eine Leiterplatte (LP) mit elektrischen Bauteilen (B1,..,B4) zur Erfüllung von Automatisierungsaufgaben,
   einen ersten Versorgungsspannungsanschluss (IN_24V) und
   einen zweiten Versorgungsspannungsanschluss (S_GND) ausgestaltet zum Anschluss einer Versorgungsspannung (24V), wobei zwischen dem ersten Versorgungsspannungsanschluss (IN_24V) und einem Einspeisepunkt (S_1P24V) der Versorgungsspannung (24V) für die Bauteile (B1,...,B4) eine Verpolschutzschaltung (VSS) angeordnet ist,
   **dadurch gekennzeichnet, dass** eine Überbrückungs-Schaltung (US) in die Verpolschutzschaltung (VSS) integriert ist, und ausgestaltet ist im Falle eines Spannungseinbruchs (SE) der Versorgungsspannung (24V), den Energiefluss für die elektrischen Bauteile (B1,...,B4) aufrecht zu erhalten.

2. Automatisierungskomponente (1) nach Anspruch 1, wobei die Verpolschutzschaltung (VSS) einen P-Kanal-MOSFET aufweist.

3. Automatisierungskomponente (1) nach einem der Ansprüche 1 oder 2, wobei die Überbrückungs-Schaltung (US) einen PNP-Transistor (V2301) aufweist.

4. Automatisierungskomponente (1) nach einem der Ansprüche 1 bis 3, wobei bei der Überbrückungs-Schaltung (US) die Basis des PNP-Transistors (V2301) durch einen hochohmigen Widerstand (R2319) mit 390 kOhm geschützt ist.

5. Automatisierungskomponente (1) nach einem der Ansprüche 1 bis 4, wobei die Verpolschutzschaltung (VSS) mit einer Z-Diode (V2309) und einer Diode (V2310) realisiert ist.

6. Automatisierungskomponente (1) nach einem der Ansprüche 1 bis 5, wobei die Überbrückungs-Schaltung (US) einen Stützkondensator (C2300) mit 1μF einen Energiefluss in einen Pufferkondensator (C2412) mit 330μF für 1ms aufrechterhält.

7. Automatisierungskomponente (1) nach einem der Ansprüche 1 bis 6, ausgestaltet als Feldgerät der Automatisierungstechnik und zudem ausgestaltet für eine kurzzeitige Überbrückung von Spannungseinbrüchen gemäß der Anforderung nach IEC 61131-2.

## FIG 1

## FIG 2

Europäisches
Patentamt

European
Patent Office

Office européen
des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2017 217003 A1 (BOSCH GMBH ROBERT [DE]) 28. März 2019 (2019-03-28) * Absätze [0016], [0032], [0044]; Abbildungen 3, 6 * ----- | 1-7 | INV. B60R16/00 H02H11/00 |
| X | CN 118 100 400 A (MAGNETI MARELLI AUTOMOTIVE COMPONENTS WUHU CO LTD) 28. Mai 2024 (2024-05-28) | 1,2,6,7 | |
| A | * das ganze Dokument * ----- | 3-5 | |
| A | KR 2014 0067207 A (OKY CO LTD [KR]) 5. Juni 2014 (2014-06-05) * das ganze Dokument * ----- | 1-7 | |

RECHERCHIERTE SACHGEBIETE (IPC)

H02H
B60R

Der vorliegende Recherchenbericht wurde für alle Patentansprüche erstellt

| Recherchenort | Abschlußdatum der Recherche | Prüfer |
|---|---|---|
| München | 31. März 2025 | Trifonov, Antoniy |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**          EP 24 21 2435

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-03-2025

| Im Recherchenbericht angeführtes Patentdokument | Datum der Veröffentlichung | Mitglied(er) der Patentfamilie | Datum der Veröffentlichung |
|---|---|---|---|
| DE 102017217003 A1 | 28-03-2019 | CN 111133650 A | 08-05-2020 |
| | | DE 102017217003 A1 | 28-03-2019 |
| | | EP 3688854 A1 | 05-08-2020 |
| | | JP 6993514 B2 | 15-02-2022 |
| | | JP 2020535785 A | 03-12-2020 |
| | | KR 20200060740 A | 01-06-2020 |
| | | US 2021159694 A1 | 27-05-2021 |
| | | WO 2019063186 A1 | 04-04-2019 |
| CN 118100400 A | 28-05-2024 | KEINE | |
| KR 20140067207 A | 05-06-2014 | KEINE | |

Für nähere Einzelheiten zu diesem Anhang : siehe Amtsblatt des Europäischen Patentamts, Nr.12/82